# EUROPEAN PATENT APPLICATION

(11) **EP 1 174 780 A1**
(43) Date of publication of application: **23.01.2002**
(21) Application number: 01117292.1
(22) Date of filing: 17.07.2001
(51) Int. Cl.: G05B 19/042

(54) **System for controlling equipment installed in a bathroom**

(30) Priority: 18.07.2000 IT BO000435; 18.10.2000 IT BO000606
(71) Applicant: TEUCO GUZZINI S.p.A., 62010 Montelupone (IT)
(72) Inventor: Guzzini, Mauro, 62019 Recanati (IT)
(74) Representative: Bongiovanni, Simone (IT)

(57) **Abstract**

System (1) for controlling equipment (4) installed in a bathroom (5), comprising a remote control unit (2) connected to the Internet (3), a plurality of measuring sensors capable of measuring a plurality of physical quantities, parameters or operating characteristics relating to at least one item of the said equipment (4), and at least one local control unit (7) connected to the said measuring sensors and to the said Internet (3); the said local control unit (7) being capable of processing the data acquired by the measuring sensors and communicating bidirectionally with the remote control unit (2) via the Internet (3) in such a way that the said remote control unit (2) can remotely monitor and control the modes of operation, the state of efficiency and the state of wear of the equipment (4) and its components.

## Description

The present invention relates to a system for controlling equipment installed in a bathroom.

As is known, in recent years there has been a considerable increase in the amount of equipment which is normally installed in bathrooms.

This is because there has been a change from relatively plain bathrooms provided solely with the conventional sanitary fittings, such as washbasins, bidets, WCs, showers and/or baths, with the corresponding taps and fittings, to particularly well-stocked bathrooms which contain, in addition to the conventional sanitary fittings, jacuzzis, sauna cabins, home gyms (in other words, fixtures which incorporate sets of gymnastic equipment), electric heaters, telephones, televisions, audio speaker systems and any other entertainment devices that may be required, such as consoles for video games and the like.

As is known, in recent years remote control systems have become available on the market for monitoring the operation of electric kitchen appliances, providing solely a passive control function intended to optimize the scheduling of maintenance operations.

It should be pointed out that, at the present time, there is no system which can provide both a passive monitoring function and an active function of data transfer from and to the equipment installed in a bathroom; this equipment is not considered to comprise purely electrical appliances, since it can be either electrically or manually operated.

The object of the present invention is to provide a system for controlling the equipment installed in a bathroom, which has both a passive monitoring function and an active function of data transfer from and to this equipment.

According to the present invention, a system for controlling the equipment installed in a bathroom is provided, and is characterized in that it comprises: at least one remote control unit connected to the Internet; a plurality of measuring sensors capable of measuring a plurality of physical quantities, parameters or operating characteristics relating to at least one item of the said equipment; and at least one local control unit connected to the said measuring sensors and to the said Internet; the said local control unit being capable of processing the data acquired by the said measuring sensors and communicating bidirectionally with the said remote control unit via the Internet in such a way that the said remote control unit can remotely monitor and control the modes of operation, the state of efficiency and the state of wear of the said equipment and its components.

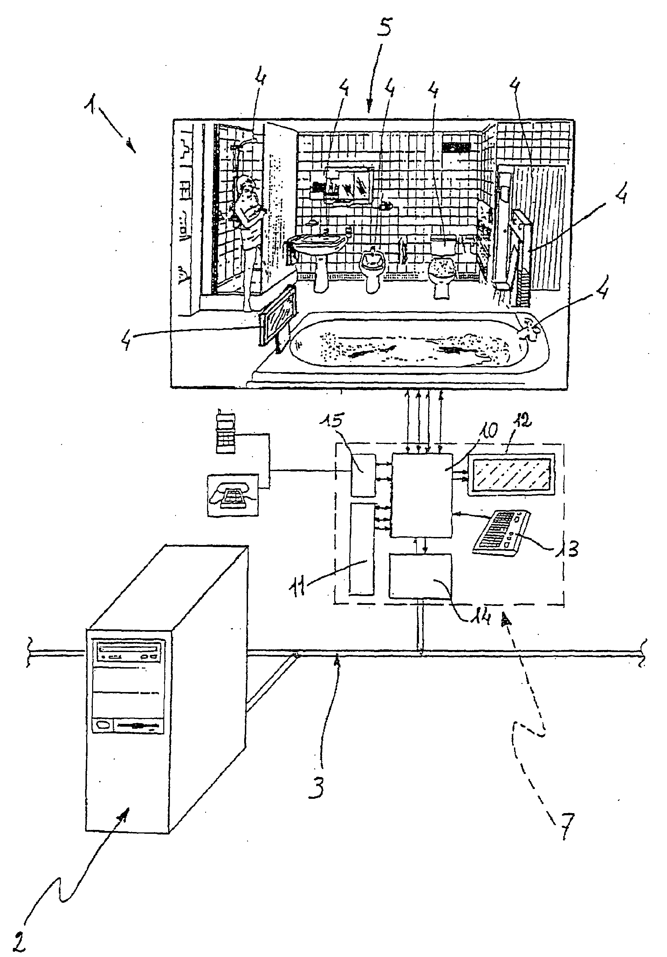

The present invention will now be described with reference to the attached drawing, which illustrates in a schematic way and without restrictive intent an example of an embodiment of the invention.

With reference to the attached figure, the number 1 indicates, as a whole, a control system which enables a remote control unit 2 to control, via the Internet 3, a set of equipment 4 installed in a bathroom 5.

The aforesaid set of equipment can include any or all of the conventional sanitary fittings (in other words washbasins, bidets, WCs, showers and/or baths) with the corresponding taps and fittings, jacuzzis, sauna cabins, "home gyms" (in other words fixtures which incorporate a set of gymnastic equipment), electric heaters, televisions, stereo installations and any other entertainment devices, such as consoles for video games and the like.

For greater clarity, in the following description the equipment 4 which can be installed in the bathroom 5 will be divided into three main groups: the first group includes electrically operated equipment of the type which is known as "intelligent", meaning that it is provided with one or more control devices (not shown) capable of controlling the whole item of equipment in a fully automatic way according to a set of operating programs that can be selected by the user; the second group includes equipment which is controlled in a purely manual way, regardless of whether the equipment is electrically operated or not; and the third group includes all the entertainment and/or information devices which are more and more commonly found in bathrooms.

The first group includes, for example, jacuzzis, sauna cabins and home gyms; the second group includes, among other items, the taps and fittings, the WC flushing system, hair dryers and electric heaters; and the third group includes televisions, audio speaker systems and any other entertainment devices, such as consoles for video games and the like.

It should be pointed out that the equipment 4 belonging to the third group can, in some cases, be incorporated in the equipment 4 belonging to the first group. Some types of jacuzzis and home gyms are provided with loudspeakers through which music is played, and/or display screens which can be used to display not only data on the operation of the equipment, but also television programmes, games of various kinds, books in digital format, etc.

With reference to the attached figure, the control system 1 comprises, in addition to the remote control unit 2 and the Internet 3, a set of measuring sensors (not illustrated) applied as appropriate to the various items of equipment 4 present in the bathroom 5, in such a way that they can detect a plurality of physical quantities, parameters or operating characteristics relating to the equipment 4, and a local control unit 7 capable of acquiring the measurements made by the various measuring sensors and of exchanging data with the control devices which control the equipment 4 belonging to the first group.

In greater detail, the measuring sensors are capable of measuring certain operating parameters such as the air temperature within the bathroom 5, the hardness of the water, the temperature of the water, the water consumption of each item of equipment 4, the operating periods of the various items of equipment 4, the electricity consumption of the various items of equipment 4, etc.; while the local control unit 7 is capable of processing the data collected by the various measuring sensors and by the control devices which control the equipment 4 belonging to the first group, so that these data can then be sent to the remote control unit 2 via the Internet 3.

With reference to the attached figure, the local control unit 7 comprises a data processing unit 10, capable of processing the data arriving from the measuring sensors and from the various control devices, and a storage unit 11 within which are stored the data collected by the various measuring sensors and the results of the processing carried out by the data processing unit 10.

Preferably, but not necessarily, the local control unit 7 also comprises a display screen 12 on which the processing unit 10 can display the available data on the various items of equipment 4; a control panel 13, in this case a keyboard, by means of which commands can be given to the data processing unit 10; and an Internet connection device 14, by means of which the data processing unit 10 can access the Internet 3 to communicate with the remote control unit 2.

Preferably, but not necessarily, the local control unit 7 is finally provided with a telephone-operated remote control device 15 by means of which the user can give commands to the data processing unit 10, using a conventional telephone or a cellular telephone. In greater detail, the telephone-operated remote control device 15 is connected to a conventional telephone line and can respond to any incoming telephone call, activating a command interface by means of which the caller can give commands to the local control unit 7, in such a way that the equipment 4 belonging to the first group can be remotely activated.

It should be pointed out that the command interface can accept either or both voice commands or commands entered by means of the telephone keypad, regardless of whether the telephone is of the conventional or cellular type.

In the case of a cellular telephone operating according to the GSM or UMTS standard, it is also possible to command the local control unit 7 by sending SMS messages or by using the WAP communications protocol. In the latter case, the interface for the command of the telephone-operated remote control device 15 can simulate an Internet site suitable for the WAP communications protocol.

As regards the remote control unit 2, in the illustrated example this consists of a conventional network server which is connected in a known way to the Internet 3, and can host one or more Internet sites, which the local control unit 7 can access either without restriction or subject to a check of the authorization.

Clearly, for reasons of security, the connection between the remote control unit 2 and the local control unit 7 is preferably, but not necessarily, established in protected mode, in other words by sending the data flow via the Internet 3 in suitably encrypted form, in such a way that it is accessible solely by the remote control unit 2 and the local control unit 7 (the "Intranet" configuration). In this case, therefore, the Internet 3 acts simply as a passive medium for the transfer of data between the remote control unit 2 and the local control unit 7.

According to a variant which is not illustrated, the system 1 comprises a protocol converter device connected to the Internet 3, and a telephone communication network permitting a bidirectional exchange of data between the protocol converter device and the local unit 7.

In this case, the local unit 7 can consist of a communication device of a known type, for example a telephone modem or router connected to the control devices of the equipment, while the protocol converter device can be provided in the form of a remote gateway which can convert data encoded by means of a first protocol to a second protocol, in such a way as to permit the reception and transmission of the data of the local unit 7 via the Internet 3.

For example, the protocol converter device can receive the data supplied by the local control unit 7 via the telephone line and "translate" it into a standard format used on the Internet, such as the TCP/IP format.

Clearly, the protocol converter device can also carry out the reverse operation, namely receiving data sent by the remote control unit 2 via the Internet 3 and converting them to a specified telephone format (ISDN, analog, GSM, GPRS, etc.) used by the local control unit 7.

Following the aforesaid data conversion operation, the protocol converter device can send the data via the telephone line to the local control unit 7, which decodes them and transmits them in the form of command signals to the control devices which control the equipment.

The operation of the control system 1 is easily deduced from the above description and therefore requires no further explanation.

The advantages of the control system 1 are evident: the system makes it possible to remotely monitor the equipment 4 installed in the bathroom 5, permitting the local measurement of all operating parameters relating to the equipment 4, and the transfer of the data thus obtained to the remote control unit 2 for subsequent analysis or processing, the whole process being subject, of course, to the consent of the user.

For example, if the remote control unit 2 is located at a specialist centre (for example, at the premises of the manufacturer of the equipment), it is possible to diagnose the state of wear of each item of equipment 4 in order to schedule appropriate maintenance by the specialist centre or by a company appointed to carry out this maintenance. Essentially, it is possible to monitor, for each item of equipment 4, the operating modes and the state of efficiency of the various components of the equipment 4, and, by means of a statistical processing procedure, the possible state of wear of these components.

Additionally, the control system 1 makes it possible to transfer from the remote control unit 2 to the local control unit 7 a set of data relating to the consumption of the various items of equipment 4 and to the best method of minimizing this consumption. It is also possible to transfer from the remote control unit 2 to the local control unit 7 the data relating to the equipment 4 which is at the highest risk of breakage or which is acting in an anomalous way, to enable the user to take the appropriate measures to rectify the problem.

Additionally, the remote control unit 2 can transmit to the local control unit 7 a set of further data, such as new operating programs for the equipment 4, which the local control unit 7 will then distribute to the various control devices of the equipment 4, in such a way that the various items of equipment 4 are always kept up to date.

The remote control unit 2 can use the Internet 3 to transmit to the local control unit 7 cultural data to be displayed on any one of the available display screens, music to be played through the audio speaker systems, or information and/or suggestions concerning new ways of using particular items of equipment 4, such as a new training programme which the user can follow by means of the apparatus present in the home gym.

Finally, it should be pointed out that, by means of the local control unit 7, the control system 1 can enable the user to connect to the remote control 2 not only in order to interact with the specialist centre in relation to the maintenance of the equipment 4, but also in order to request advice on the use of the equipment 4, to check for the presence of information on new control programs designed for the equipment 4, to agree inspections and/or maintenance work to be carried out on the user's equipment 4, to order any accessories or components to be fitted to the user's equipment 4, etc.

Finally, the use (according to the variant of the control system 1 described above) of the communication device (local control unit 7) and the protocol converter device (gateway) considerably simplifies the control system 1 and consequently reduces the manufacturing costs. This is because, in this case, it is sufficient to provide the bathroom with a modem or a router and use the ordinary fixed or mobile telephone network to interface the Internet 3 with the control devices associated with the equipment present in the bathroom, thus making it unnecessary to use the personal computer within or in the vicinity of the bathroom, and consequently reducing the overall dimensions of the said control system 1.

Lastly, it is clear that the control system 1 described and illustrated here can be modified and varied without departure from the scope of the present invention.

For example, the control system 1 can be implemented in such a way as to control a plurality of local control units 7, each of which is connected to the equipment 4 present in a corresponding bathroom 5.

The facility for monitoring the use of the various items of equipment 4 by means of the control system 1 also makes it possible to implement a different form of payment for the equipment 4.

This is because the control system 1 enables the manufacturer, or his agent, to know exactly how many times an item of equipment 4 (for example a jacuzzi) has been used in a given period of time, making it possible to periodically debit the user of the aforesaid equipment 4 with a sum of money dependent on the actual use of the equipment.

In other words, the manufacturer, or his agent, can sell a given item of equipment 4 at a price below the market value, with the proviso that the purchaser of the aforesaid equipment 4 is required to pay a specified sum whenever the equipment 4 has been used.

For example, it is possible to debit the customer annually with a sum of money which is a function of the number of times that the equipment 4 has been used during the year. The number of times that the equipment 4 has actually been used can be determined advantageously, but not necessarily, via the Internet 3.

## Claims

1. System (1) for controlling equipment (4) installed in a bathroom (5), **characterized in that** it comprises: at least one remote control unit (2) connected to the Internet (3); a plurality of measuring sensors capable of measuring a plurality of physical quantities, parameters or operating characteristics relating to at least one item of the said equipment (4); and at least one local control unit (7) connected to the said measuring sensors and to the said Internet (3); the said local control unit (7) being capable of processing the data acquired by the said measuring sensors and communicating bidirectionally with the said remote control unit (2) via the Internet (3), in such a way that the said remote control unit (2) can remotely monitor and control the modes of operation, the state of efficiency and the state of wear of the said equipment (4) and its components.

2. System according to Claim 1, **characterized in that** at least one of the said items of equipment (4) is provided with its own control device, and **in that** the said local control unit 7 can interact with the said control device; the said local control unit (7) being capable of processing the data transmitted by the said control device, in such a way that the said remote control unit (2) can remotely monitor the state of efficiency and the state of wear of the equipment (4) provided with the said control device; the remote control unit (2) being capable of remotely controlling the modes of operation of the equipment (4) provided with the said control device.

3. System according to any one of the preceding claims, **characterized in that** the said local control unit (7) comprises a telephone-operated remote control device (15) by means of which the user can give commands to the control device of the said equipment, using a conventional telephone or a cellular telephone.

4. System according to Claim 3, **characterized in that** the said telephone-operated remote control device (15) is connected to a conventional telephone line and can respond to an incoming telephone call by activating a command interface by means of which the caller can give voice commands to the local control unit (7).

5. System according to Claim 3, **characterized in that** the said telephone-operated remote control device (15) is connected to a conventional telephone line and can respond to an incoming telephone call by activating a command interface by means of which the caller can give commands to the local control unit (7) via the telephone keypad.

6. System according to any one of the preceding claims, **characterized in that** the said local control unit (7) comprises a data processing unit (10) capable of processing the data from the measuring sensors and from the control devices fitted in the equipment (4); a storage unit (11) within which are stored the data collected by the various measuring sensors and the results of the processing carried out by the data processing unit (10).

7. System according to Claim 6, **characterized in that** the said local control unit (7) also comprises a display screen (12) on which the processing unit (10) can display the available data on the various items of equipment (4).

8. System according to Claim 6 or 7, **characterized in that** the said local control unit (7) also comprises a control panel (13) by means of which commands can be given to the data processing unit (10).

9. System according to Claim 6, 7 or 8, **characterized in that** the said local control unit (7) also comprises an Internet connection device (14) by means of which the data processing unit (10) can access the Internet (3) to communicate with the remote control unit (2).

10. System according to either of Claims 1 or 2, **characterized in that** it comprises protocol converter means which can interface the said local control unit (7) with the said Internet.

11. System according to Claim 10, **characterized in that** the said local control unit (7) is connected via a telephone network to the said protocol converter means in such a way as to permit a bidirectional exchange of data via the Internet (3) between the remote control unit (2) and the said control devices fitted in the said equipment (4).

12. System according to Claim 11, **characterized in that** the said local control unit (7) is a modem or a router.

13. System according to either of Claims 11 or 12, **characterized in that** the said telephone network is a fixed or mobile telephone network.

14. System according to any one of the preceding claims, **characterized in that** at least one of the said items of equipment (4) comprises a manually operated component.

15. System according to any one of the preceding claims, **characterized in that** at least one of the said items of equipment (11) is a sauna cabin, a shower booth or a jacuzzi.

16. System according to any one of the preceding claims, **characterized in that** the said measuring sensors can measure certain operating parameters such as the air temperature within the bathroom (5), the hardness of the water, the temperature of the water, the water consumption of each item of equipment (4), the operating periods of the various items of equipment (4), the electricity consumption of the various items of equipment (4), etc.

17. System according to any one of the preceding claims, **characterized in that** it enables the manufacturer, or his agent, to determine how many times a said item of equipment (4) has been used in a specified period of time, and to debit the user of the aforesaid equipment (4) with a sum of money which depends on the actual use which has been made of the equipment (4).

18. System according to Claim 17, **characterized in that** the number of times that the said equipment (4) has actually been used is determined via the Internet (3).
